# EUROPÄISCHE PATENTSCHRIFT

(11) **EP 2 066 526 B1**
(45) Veröffentlichungstag und Bekanntmachung des Hinweises auf die Patenterteilung: **27.04.2011**
(21) Anmeldenummer: 07802843.8
(22) Anmeldetag: 24.08.2007
(51) Int. Cl.: B60N 2/28

(54) **KINDERSCHUTZSYSTEM**
CHILD'S PROTECTION SYSTEM
SYSTÈME DE PROTECTION POUR ENFANTS

(30) Priorität: 21.09.2006 DE 102006045533; 15.05.2007 DE 102007023473
(43) Veröffentlichungstag der Anmeldung: 10.06.2009
(73) Patentinhaber: Takata-Petri AG, 63743 Aschaffenburg (DE)
(72) Erfinder: PORRMANN, Volker, 63739 Aschaffenburg (DE); BOLL, Rüdiger, 63856 Bessenbach (DE); NETT, Rainer, 63739 Aschaffenburg (DE)
(74) Vertreter: Baumgärtel, Gunnar
(86) Internationale Anmeldenummer: PCT/EP2007/058791
(87) Internationale Veröffentlichungsnummer: WO 2008/034683

(56) Entgegenhaltungen:
- EP-A- 1 564 065
- WO-A-2005/079239
- DE-U-202005 013 453

## Beschreibung

Die Erfindung betrifft ein Kinderschutzsystem nach dem Oberbegriff des Anspruchs 1.

Ein derartiges, z. B. als Kindersitz bezeichnetes Kinderschutzsystem umfasst beispielsweise eine entlang einer Lehnenlängsrichtung erstreckte Rückenlehne, an der sich ein das Kinderschutzsystem benutzendes Kind mit seinem Rücken abstützen kann, wobei sich die Wirbelsäule des Kindes entlang der Lehnenlängsrichtung erstreckt, sowie ein Gurtsystem, mit dem das Kind in einer ordnungsgemäßen Position am Kinderschutzsystem gesichert werden kann.

Bei dem Gurtsystem kann es sich insbesondere um ein Drei-Punkt- oder ein Fünf-Punkt-Gurtsystem handeln, je nach dem, ob der mindestens eine Sicherheitsgurt Gurtsystem an drei Punkten oder an fünf Punkten definiert an einer tragenden Struktur des Kinderschutzsystems und/oder der Fahrzeugumgebung definiert positioniert ist.

Derartige Gurtsysteme sind einstellbar, z. B. hinsichtlich der Position einzelner Gurtpunkte am Kinderschutzsystem, um das Gurtsystem an die anthropometrischen Gegebenheiten des kindlichen Körpers anpassen und so bestmöglichen Komfort und bestmögliche Sicherheit für ein Kind gewährleisten zu können.

Kinderschutzsysteme bei denen die Position von Gurtpunkten des jeweiligen Sicherungssystems einstellbar ist, sind beispielsweise in der EP 1 564 065 A die ein kinderschutzsystem entsprechend dem Oberbegriff des Anspruchs 1 zeigt und in der WO 2005/079239 A beschrieben.

Häufig besteht jedoch Unsicherheit, welches die unter den jeweiligen Umständen, also z.B. in Abhängigkeit von Alter, Gewicht und Größe des Kindes, optimale Einstellung des Gurtsystems ist. Zudem kann die Verstellung der einzelnen Gurtpunkte, über die der mindestens eine Sicherheitsgurt des Gurtsystems definiert bezüglich einer tragenden Struktur des Kinderschutzsystems positioniert ist, Schwierigkeiten bereiten.

Der Erfindung liegt daher das Problem zugrunde, ein Kinderschutzsystem der eingangs genannten Art zu schaffen, das sich durch eine einfache und zugleich Sicherheit gewährleistende Einstellbarkeit des Gurtsystems auszeichnet.

Dieses Problem wird erfindungsgemäß durch die Schaffung eines Kinderschutzsystems mit den Merkmalen des Patentanspruchs 1 gelöst.

Danach weist das Kinderschutzsystem eine in ihrer Position verstellbare Baugruppe auf, die mindestens zwei Gurtpunkte definiert, an der der mindestens eine Sicherheitsgurt des Gurtsystems definiert positioniert ist, z. B. umgelenkt wird, so dass durch Verstellung der Position der einen Baugruppe des Kinderschutzsystems gleichzeitig zwei Gurtpunkte in ihrer Position verstellt werden können. Am Kinderschutzsystem ist eine Anzeigeeinrichtung vorgesehen, mittels der die eingestellte Position der Gurtpunkte ablesbar ist. Die Anzeigeeinrichtung umfasst dabei eine Skala und ein Anzeigefenster, welche bei einer Bewegung der verstellbaren Baugruppe relativ zueinander beweglich sind, und von welchen der beiden Elemente eines gemeinsam mit den zu verstellenden Gurtpunkten bewegbar ist.

Die erfindungsgemäße Lösung eignet sich insbesondere für die Einstellung der so genannten Gurthöhe, also z. B. für die Verstellung zweier Gurtpunkte entlang der Lehnenlängsrichtung, wobei die beiden Gurtpunkte insbesondere quer zur Lehnenlängsrichtung nebeneinander angeordnet sind und jeweils einen Umlenkpunkt für den mindestens einen Sicherheitsgurt des Gurtsystems bilden. Bei den Umlenkpunkten kann es sich um Schlitze handeln, durch die jeweils ein Gurtabschnitt des Sicherheitsgurtes geführt ist.

Die erfindungsgemäße Lösung ermöglicht bei geeigneter Ausgestaltung eines Griffbereiches der verstellbaren Baugruppe eine einhändige Einstellung mehrerer Gurtpunkte, insbesondere der Gurthöhe, da die Position mindestens zweier Gurtpunkte neu eingestellt werden kann, indem eine einzelne Baugruppe des Kinderschutzsystems verstellt wird.

Bei der verstellbaren Baugruppe kann es sich um ein Rückenlehnenteil handeln, das beweglich, insbesondere entlang der Lehnenlängsrichtung verschieblich, an der Rückenlehne des Kinderschutzsystems angeordnet ist.

Als ein besonderer Aspekt der Erfindung ist allgemein bei einem Kinderschutzsystem für Kraftfahrzeuge zur Anordnung an einem Kraftfahrzeugsitz mit einer entlang einer Lehnenlängsrichtung erstreckten Rückenlehne und mit einem Sicherheitsgurtsystem zum Halten des Kindes am Kinderschutzsystem, wobei die Lage mindestens eines Gurtpunktes des Gurtsystems, über den ein Gurtabschnitt eines Sicherheitsgurtes des Gurtsystems am Kinderschutzsystem positionierbar ist, verstellt werden kann, mindestens ein Gurtpunkt an einem an der Rückenlehne bewegbar gelagerten Rückenlehnenteil ausgebildet, welches entlang der Rückenlehne in Lehnenlängsrichtung verstellbar ist.

Der verstellbaren Baugruppe des Kinderschutzsystems ist ein Verriegelungsmechanismus zugeordnet, um die verstellbare Baugruppe in einer zuvor eingestellten Position arretieren zu können. Der Verriegelungsmechanismus weist hierzu z. B. Formschlusselemente auf, die einerseits an der verstellbaren Baugruppe und andererseits an einer nicht gemeinsam mit jener Baugruppe bewegbaren Komponente des Kinderschutzsystems vorgesehen sind und die zur Verriegelung der verstellbaren Baugruppe in einer zuvor eingestellten Position formschlüssig ineinander greifen können, insbesondere Formschlusselemente in Form von Rastelementen.

Gemäß einer konkreten Ausführungsform ist eine Rastschiene mit in Verstellrichtung hintereinander angeordneten Raststellen, z.B. in Form von Rastöffnungen vorgesehen, wobei die einzelnen Rastöffnungen unterschiedliche Einstellpositionen der verstellbaren Baugruppe definieren und den Rastöffnungen ein Rastvorsprung zugeordnet ist, der - in Abhängigkeit von der Einstellposition der verstellbaren Baugruppe - in eine der Rastöffnungen eingreift. Dabei ist der Rastvorsprung bevorzugt elastisch in Richtung auf einen verriegelten Zustand vorgespannt.

Alternativ kann auch eine Mehrzahl Rastvorsprünge an der Rastschiene vorgesehen sein, wobei die einzelnen Rastvorsprünge jeweils eine Einstellposition der verstellbaren Baugruppe definieren und der Mehrzahl Rastvorsprünge eine Rastöffnung zugeordnet ist, die in Abhängigkeit von der Einstellposition der verstellbaren Baugruppe mit einem der Rastvorsprünge in Eingriff bringbar ist.

Weitere Einzelheiten und Vorteile der Erfindung werden bei der nachfolgenden Beschreibung eines Ausführungsbeispieles anhand der Figuren deutlich werden.

Es zeigen:
- Fig. 1: eine perspektivische Vorderansicht eines Kinderschutzsystems in Form eines Kindersitzes mit integriertem Gurtsystem;
- Fig. 2: eine perspektivische Rückansicht des Kinderschutzsystems aus Figur 1.

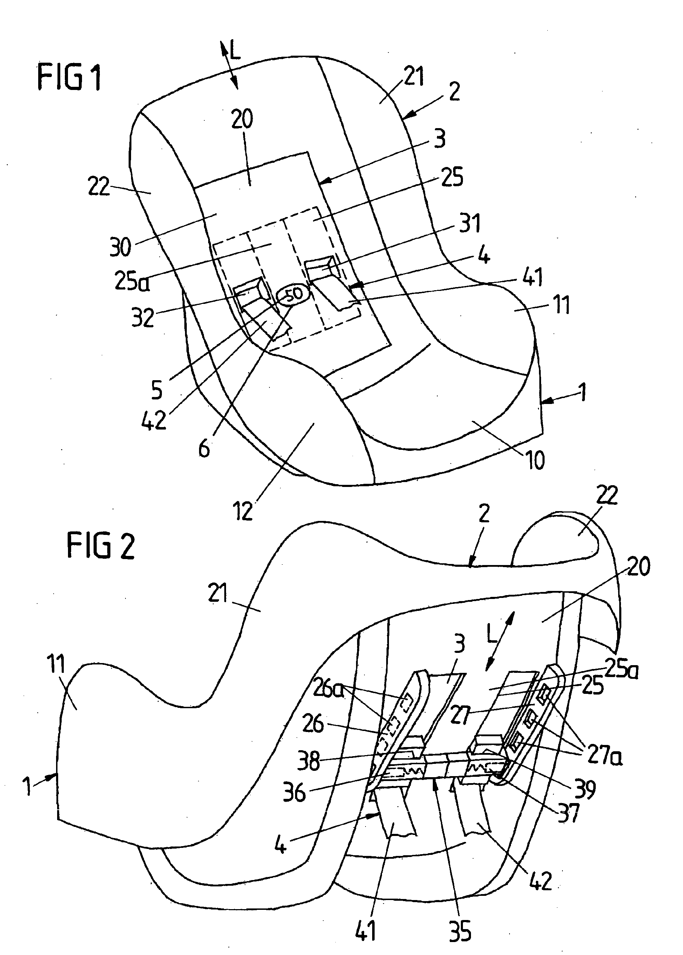

In den Figuren 1 und 2 ist perspektivisch ein Kindersitz für ein Kraftfahrzeug, also zur Anordnung auf einen Kraftfahrzeugsitz, dargestellt, der eine von einer Sitzschale 1 abstehende, entlang einer Lehnenlängsrichtung L erstreckte Rückenlehne 2 sowie ein Gurtsystem aufweist. Die Rückenlehne 2 dient zum Abstützen des Rückens eines Kindes, welches auf der Sitzschale 1 des Kindersitzes Platz nimmt hat, wobei sich die Wirbelsäule des Kindes dann im Wesentlichen entlang der Lehnenlängsrichtung L erstreckt. Sowohl die eine Sitzfläche 10 bildende Sitzschale 1 als auch die eine Rückenstütze 20 bildende Rückenlehne 2 weisen jeweils seitliche Sitzwangen 11, 12; 21, 22 zur (mittigen) Stabilisierung einer bestimmungsgemäßen Sitzposition eines Kindes auf.

In die Rückenlehne 2 des Kindersitzes 1 ist eine bewegliche Baugruppe in Form eines entlang der Lehnenlängsrichtung L translatorisch verstellbaren Rückenlehnenteiles 3 integriert, welches mit seinem Grundkörper 30 einen Bestandteil der Rückenstütze 20 der Rückenlehne 2 bildet. Dieses Rückenlehnenteil 3 weist in seinem Grundkörper 30 zwei Gurtpunkte 31, 32 in Form von Umlenkstellen auf, die an jeweils einem Gurtabschnitt 41, 42,-nämlich einem Schultergurtabschnitt, eines Sicherheitsgurtes 4 des Kinderschutzsystems geführt und umgelenkt sind. Die Gurtpunkte 31, 32 in Form von Umlenkstellen in dem Rückenlehnenteil 3 sind vorliegend jeweils als Schlitze ausgeführt, die von den umzulenkenden Schultergurtabschnitten 41, 42 des Sicherheitsgurtes 4 durchgriffen werden. Hierdurch ist der Sicherheitsgurt 4 an diesen zwei quer zur Lehnenlängsrichtung L voneinander beabstandeten Gurtpunkten 41, 42 (Umlenkstellen) jeweils in eindeutiger Weise an einer tragenden Struktur des Kinderschutzsystems, nämlich am Lehnenteil 3 der Rückenlehne 2, positioniert.

Aufgrund der (translatorischen) Beweglichkeit des Rückenlehnenteiles 3, welches hierzu vorteilhaft an einer entlang der Verstellbahn des Rückenlehnenteils 3, also entlang der Lehnenlängsrichtung L, erstreckten Schiene 25a längsbeweglich geführt ist, lässt sich die Gurthöhe des Sicherheitsgurtes 4, also die Lage der die Schultergurtabschnitte 41, 42 führenden und positionierenden Umlenkstellen 31, 32 des Kinderschutzsystems entlang der Lehnenlängsrichtung L einstellen, und zwar für beide Umlenkstellen 31, 32 gleichzeitig (durch Verschiebung des einen Rückenlehnenteiles 3).

Die als Führungsschiene dienende längserstreckte Schiene 25a ist in der Rückenlehne 2, genauer in der Rückenstütze 20 ausgebildet und überbrückt eine in der Rückenstütze 20 vorgesehene Ausnehmung 25 in Lehnenlängsrichtung L. Das verstellbare Rückenlehnenteil 3, welches mit seinem Grundkörper 30 vor der vorderen, einem den Kindersitz nutzenden Kind zugewandten Oberfläche der Rückenlehne 2 bzw. Rückenstütze 20 angeordnet ist, umgreift die längserstreckte Führungsschiene 25a mit einem rückseitigen Führungsabschnitt 35 in Form einer Quertraverse, so dass das höhenverstellbare Rückenlehnenteil 3 an der in Lehnenlängsrichtung L erstreckten Führungsschiene 25a entlang jener Richtung L beweglich (verschieblich) geführt ist. Auf der Rückseite des Kindersitzes, genauer der Rückseite der Rückenlehne 2, ist (an dem Führungsabschnitt 35 des verstellbaren Rückenlehnenteiles 3) eine Bedieneinrichtung vorgesehen, die Bedienmittel in Form eines oder mehrerer Bedienelemente 38, 39 aufweist, mittels derer ein Rastmechanismus entriegelbar ist, der zur Verriegelung des Rückenlehnenteiles 3 in seiner jeweiligen Einstellposition entlang der Lehnenlängsrichtung L dient.

Der Rastmechanismus umfasst eine Mehrzahl Raststellen 26a, 27a in Form von Rastöffnungen, die entlang der Verstellbahn des Rückenlehnenteiles 3, also entlang der Lehnenlängsrichtung L, an je einer von zwei parallel zueinander entlang der Lehnenlängsrichtung L erstreckten und quer zu jener Richtung L voneinander beabstandeten Rastschienen 26, 27 hintereinander angeordnet sind. Dabei greift in jeder der möglichen Einstellpositionen des Rückenlehnenteils 3 ein an der Rückseite des Rückenlehnenteiles 3 vorgesehenes Rastelement 36, 37 in Form eines Rastvorsprunges in je eine der Rastöffnungen 26a, 27a der beiden Rastschienen 26, 27 ein. Der jeweilige Rastvorsprung 36, 37 ist dabei elastisch in Richtung auf die jeweils zugeordnete Rastöffnung 26a, 27a vorgespannt, so dass das Rückenlehnenteil 3 tendenziell in einer jeweils eingestellten Rastposition sicher verriegelt ist.

Diese (formschlüssige) Verriegelung lässt sich durch Betätigung der hierfür vorgesehenen Bedienmittel 38, 39 aufheben, indem der jeweilige in eine der Rastöffnungen 26a, 27a eingreifende Rastvorsprung 36, 37 entgegen der (z. B. mittels eines Federelementes aufgebrachten) elastischen Vorspannung aus der jeweils zugeordneten Rastöffnung 26a, 27a ausgehoben wird. Sodann kann das Rückenlehnenteil 3 entlang der Lehnenlängsrichtung L verschoben und dadurch in seiner Position neu eingestellt werden, um die Gurthöhe zu verstellen. Anschließend wird das Rückenlehnenteil 3 in der aktuell eingestellten Position mittels des vorstehend beschriebenen Rastmechanismus wieder verriegelt. Bei geeigneter Auslegung des Rastmechanismus unter Zuordnung mehrerer Rastöffnungen einerseits und mehrerer Rastvorsprünge andererseits, kann die Einstellung der Gurthöhe auch inkrementell vorgenommen werden.

Aufgrund der elastischen Vorspannung, unter der die Rastelemente 36, 37 in Richtung auf die Rastschienen 26, 27 und die dortigen Rastöffnungen 26a, 27a verspannt sind, ist bei einer Neueinstellung der Position des Lehnenteils 3 entlang der Lehnenlängsrichtung L eine permanente Betätigung der Bedienmittel 38, 39 (bestehend aus einem oder mehreren Bedienelementen) erforderlich. Sobald diese Betätigung aufgehoben wird, rasten die Rastelemente 36, 37 in der nächstkommenden Rastposition in die zugeordneten Rastöffnungen 26a, 27a ein.

Im Ergebnis ist die Position der beiden Gurtpunkte 31, 32 also in nur einem Einstellvorgang gemeinsam verstellbar, indem die Position des verstellbaren Lehnenteiles 3 entlang der Lehnenlängsrichtung L neu eingestellt wird. Diese Verstellung kann einhändig erfolgen, indem das Lehnenteil 3 entlang der Lehnenlängsrichtung L bewegt wird, z. B. durch Ergreifen des dann als Handgriff dienenden Führungsabschnittes 35, welcher die längserstreckte Führungsschiene 25a hintergreift, und durch Bewegen jenes Führungsabschnittes 35 entlang der Führungsschiene 25a, wobei das Lehnenteil 3 insgesamt mitgenommen wird. Dieser Vorgang wird weiter vereinfacht, wenn als Bedienmittel 38, 39 nur ein Bedienelement zum Entriegeln des Rastmechanismus vorgesehen ist.

Die aktuelle Einstellposition des Rückenlehnenteiles 3 bezüglich der nicht gemeinsam hiermit verschiebbaren Komponenten der Rückenlehne 2 lässt sich an einer hinter einem Anzeigefenster 6 vorgesehenen Skala 5 ablesen. Die Skala 5 kann beispielsweise so am Kindersitz angeordnet sein, dass sie nicht gemeinsam mit dem Rückenlehnenteil 3 (entlang der Lehnenlängsrichtung L) bewegbar ist, während das Anzeigefenster 6 am Rückenlehnenteil 3 vorgesehen ist und somit bei einer Neueinstellung der Gurthöhe gemeinsam mit diesem entlang der Lehnenlängsrichtung L verschoben wird.

## Patentansprüche

1. Kinderschutzsystem für Kraftfahrzeuge zur Anordnung an einen Kraftfahrzeugsitz, mit
- einer eine Rückenstütze (20) bildenden Rückenlehne (2) zum Abstützen des Rückens eines Kindes und
- einem Sicherheitsgurtsystem zum Halten des Kindes am Kinderschutzsystem,
wobei das Kinderschutzsystem Gurtpunkte (31, 32) umfasst, an denen mindestens ein Sicherheitsgurt (4) des Gurtsystems an einer tragenden Baugruppe des Kinderschutzsystems positioniert ist,
und wobei mindestens zwei Gurtpunkte (31, 32) an einer Baugruppe (3) des Kinderschutzsystems angeordnet sind, die entlang einer sich in Lehnenlängsrichtung erstreckenden Verstellbahn verstellbar ist, so dass durch Einstellung der Position der verstellbaren Baugruppe (3) die Position beider Gurtpunkte (31, 32) neu eingestellt wird, wobei die verstellbare Baugruppe (3) an einer entlang der Lehnenlängsrichtung (L) erstreckten Führungsschiene (25a) beweglich geführt ist,
**dadurch gekennzeichnet,**
**dass** am Kinderschutzsystem eine Anzeigeeinrichtung (5, 6) vorgesehen ist, mittels der die eingestellte Position der Gurtpunkte (31, 32) ablesbar ist, und dass die Anzeigeeinrichtung (5, 6) eine Skala (5) und ein Anzeigefenster (6) umfasst, welche bei einer Bewegung der verstellbaren Baugruppe (3) relativ zueinander beweglich sind, und von welchen der beiden Elemente (5, 6) eines gemeinsam mit den zu verstellenden Gurtpunkten (31, 32) bewegbar ist, wobei die Führungsschiene (25a) in der Rückenstütze (20) ausgebildet ist und eine in der Rückenstütze (20) vorgesehene Ausnehmung (25) in Lehnenlängsrichtung (L) überbrückt.

2. Kinderschutzsystem nach Anspruch 1, **dadurch gekennzeichnet, dass** die Gurtpunkte (31, 32) als Umlenkstellen zur Umlenkung eines Gurtabschnittes des Sicherheitsgurtes (4) ausgebildet sind.

3. Kinderschutzsystem nach Anspruch 2, **dadurch gekennzeichnet, dass** die Gurtpunkte (31, 32) durch Schlitze der verstellbaren Baugruppe (3) gebildet werden.

4. Kinderschutzsystem nach einem der vorhergehenden Ansprüche, **dadurch gekennzeichnet, dass** die an den Gurtpunkten (31, 32) positionierten Gurtabschnitte (41, 42) des mindestens einen Sicherheitsgurtes (4) Schultergurtabschnitte sind.

5. Kinderschutzsystem nach einem der vorhergehenden Ansprüche, **dadurch gekennzeichnet, dass** die verstellbare Baugruppe (3) entlang der Lehnenlängsrichtung (L) verschiebbar ist.

6. Kinderschutzsystem nach einem der vorhergehenden Ansprüche, **dadurch gekennzeichnet, dass** die verstellbare Baugruppe (3) ein bewegbares Rückenlehnenteil der Rückenlehne (2) des Kinderschutzsystems ist.

7. Kinderschutzsystem nach einem der vorhergehenden Ansprüche, **dadurch gekennzeichnet, dass** die verstellbare Baugruppe (3) in ihrer jeweils eingestellten Position mittels eines Verriegelungsmechanismus (26, 27; 36, 37) verriegelbar ist.

8. Kinderschutzsystem nach Anspruch 7, **dadurch gekennzeichnet, dass** der Verriegelungsmechanismus (26, 27; 36, 37) einen Rastmechanismus umfasst.

9. Kinderschutzsystem nach Anspruch 7 oder 8, **dadurch gekennzeichnet, dass** der Verriegelungsmechanismus (26, 27; 36, 37) elastisch in den verriegelten Zustand vorgespannt ist.

10. Kinderschutzsystem nach einem der Ansprüche 7 bis 9, **dadurch gekennzeichnet, dass** Bedienmittel (38, 39) vorgesehen sind, um den Verriegelungsmechanismus (26, 27; 36, 37) zu entriegeln.

11. Kinderschutzsystem nach einem der vorhergehenden Ansprüche, **dadurch gekennzeichnet, dass** die Position der mindestens zwei Gurtpunkte (31, 32) einhändig verstellbar ist.

## Claims

1. Child protection system for motor vehicles for arrangement on a motor vehicle seat, comprising
- a backrest (2) forming a back support (20) for supporting the back of a child, and
- a safety belt system for holding the child at the child protection system,
wherein the child protection system comprises belt points (31, 32) at which at least one safety belt (4) of the belt system is positioned on a load-bearing assembly of the child protection system,
and wherein at least two belt points (31, 32) are arranged on an assembly (3) of the child protection system, which are adjustable along an adjustment path which extends along a longitudinal direction of the backrest, so that the position of the two belt points (31, 32) can be re-set by adjusting the position of the adjustable assembly (3), wherein the adjustable assembly (3) is movably guided at a rail (25a) which extends along the longitudinal direction (L) of the backrest,
**characterized in that**
a display (5, 6) is provided on the child protection system by means of which the adjusted position of the belt points (31, 32) is readable, und **in that** the display (5, 6) comprises a scale (5) and a display window (6) which are, upon a movement of the adjustably assembly (3), movable with respect to each other, wherein one of both elements (5, 6) can be moved together with the belt points (31, 32) that are to be adjusted, wherein the rail (25a) is designed in the back support (20) and bridges a recess (25) provided in the back support (20) along the longitudinal direction (L) of the backrest.

2. Child protection system as claimed in claim 1, **characterized in that** the belt points (31, 32) are designed as deflection areas for deflecting a belt portion of the safety belt (4).

3. Child protection system as claimed in claim 2, **characterized in that**, the belt points (31, 32) are formed by slots of the adjustable assembly (3).

4. Child protection system as claimed in one of the preceding claims, **characterized in that** the belt portions (41, 42) of the at least one safety belt (4) that are positioned at the belt points (31, 32) are shoulder belt portions.

5. Child protection system as claimed in one of the preceding claims, **characterized in that** the adjustable assembly (3) is movable along the longitudinal direction (L) of the backrest.

6. Child protection system as claimed in one of the preceding claims, **characterized in that** the adjustable assembly (3) is a movable backrest part of the backrest (2) of the child protection system.

7. Child protection system as claimed in one of the preceding claims, **characterized in that** the adjustable assembly (3) is lockable in each of its adjusted positions by means of a lock mechanism (26, 27; 36, 37).

8. Child protection system as claimed in claim 7, **characterized in that** the lock mechanism (26, 27; 36, 37) comprises a latching mechanism.

9. Child protection system as claimed in claim 7 or 8, **characterized in that** the lock mechanism (26, 27; 36, 37) is elastically pretensioned towards the locked state.

10. Child protection system as claimed in one of the claims 7 to 9, **characterized in that** operating means (38, 39) are provided for unlocking the lock mechanism (26, 27; 36, 37).

11. Child protection system as claimed in one of the preceding claims, **characterized in that** the position of the at least two belt points (31, 32) can be adjusted single-handedly.

## Revendications

1. Système de protection pour enfants dans des véhicules automobiles, destiné à être agencé sur un siège de véhicule automobile, comprenant
- un dossier (2) formant un soutien dorsal (20) pour soutenir le dos d'un enfant, et
- un système de ceinture de sécurité pour tenir l'enfant sur le système de protection pour enfants,
dans lequel le système de protection pour enfants comprend des points de ceinture (31, 32) auxquels au moins une ceinture de sécurité (4) du système de ceinture est positionnée sur un groupe structurel porteur du système de protection pour enfants,
et dans lequel au moins deux points de ceinture (31, 32) sont agencés sur un groupe structurel (3) du système de protection pour enfants qui est déplaçable le long d'une trajectoire de déplacement s'étendant en direction longitudinale du dossier, de sorte que par réglage de la position du groupe structurel déplaçable (3) la position des deux points de ceinture (31, 32) est nouvellement réglée, et le groupe structurel déplaçable (3) est guidé en déplacement sur un rail de guidage (25a) s'étendant le long de la direction longitudinale (L) du dossier,
**caractérisé en ce qu'**un moyen d'affichage (5, 6) est prévu sur le système de protection pour enfants, au moyen duquel la position réglée des points de ceinture (31, 32) est lisible, et **en ce que** le moyen d'affichage (5, 6) comprend une échelle (5) et une fenêtre d'affichage (6), lesquelles sont mobiles l'une par rapport à l'autre lors d'un mouvement du groupe structurel déplaçable (3) et parmi les deux éléments (5, 6) l'un d'eux est déplaçable conjointement avec les points de ceinture (31, 32) à déplacer, et le rail de guidage (25a) est réalisé dans le soutien dorsal (20) et comble un évidement (25) prévu dans le soutien dorsal (20) en direction longitudinale (L) du dossier.

2. Système de protection pour enfants selon la revendication 1, **caractérisé en ce que** les points de ceinture (31, 32) sont réalisés comme des emplacements de renvoi pour le renvoi d'un tronçon de la ceinture de sécurité (4).

3. Système de protection pour enfants selon la revendication 2, **caractérisé en ce que** les points de ceinture (31, 32) sont formés par des fentes du groupe structurel déplaçable (3).

4. Système de protection pour enfants selon l'une des revendications précédentes, **caractérisé en ce que** les tronçons de ceinture (41, 42), positionnés au niveau des points de ceinture (31, 32), de ladite au moins une ceinture de sécurité (4) sont des tronçons de ceinture pour épaule.

5. Système de protection pour enfants selon l'une des revendications précédentes, **caractérisé en ce que** le groupe structurel déplaçable (3) est déplaçable par translation le long de la direction longitudinale (L) du dossier.

6. Système de protection pour enfants selon l'une des revendications précédentes, **caractérisé en ce que** le groupe structurel déplaçable (3) est une partie de soutien dorsal mobile du dossier (2) du système de protection pour enfants.

7. Système de protection pour enfants selon l'une des revendications précédentes, **caractérisé en ce que** le groupe structurel déplaçable (3) est verrouillable dans sa position respectivement réglée au moyen d'un mécanisme de verrouillage (26, 27 ; 36, 37).

8. Système de protection pour enfants selon la revendication 7, **caractérisé en ce que** le mécanisme de verrouillage (26, 27 ; 36, 37) comprend un mécanisme d'enclenchement.

9. Système de protection pour enfants selon la revendication 7 ou 8, **caractérisé en ce que** le mécanisme de verrouillage (26, 27 ; 36, 37) est précontraint élastiquement dans la situation verrouillée.

10. Système de protection pour enfants selon l'une des revendications 7 à 9, **caractérisé en ce qu'**il est prévu des éléments d'actionnement (38, 39) afin de déverrouiller le mécanisme de verrouillage (26, 27 ; 36, 37).

11. Système de protection pour enfants selon l'une des revendications précédentes, **caractérisé en ce que** la position desdits au moins deux points de ceinture (31, 32) est déplaçable à l'aide d'une seule main.
